Europäisches Patentamt

European Patent Office

Office européen des brevets

(11) Veröffentlichungsnummer : **0 098 236**
**B1**

# (12) EUROPÄISCHE PATENTSCHRIFT

(45) Veröffentlichungstag der Patentschrift :
26.03.86

(21) Anmeldenummer : 83730060.7

(22) Anmeldetag : 29.06.83

(51) Int. Cl.⁴ : **F 16 L   3/12,** F 16 L 19/00,
F 16 L 21/00, F 16 L 33/02,
F 01 N   7/08

(54) **Lösbare rohrförmige Klemme zum Verbinden von zylindrischen Rohren.**

(30) Priorität : 29.06.82 DE 3224601

(43) Veröffentlichungstag der Anmeldung :
11.01.84 Patentblatt 84/02

(45) Bekanntmachung des Hinweises auf die Patenterteilung : 26.03.86 Patentblatt 86/13

(84) Benannte Vertragsstaaten :
FR IT

(56) Entgegenhaltungen :
CH-A-   437 926
DE-A- 2 252 874
DE-A- 3 143 377
FR-A-   142 855
FR-A- 2 031 764
FR-A- 2 277 652
GB-A-   757 408
GB-A- 1 067 968
GB-A- 2 016 624
US-A- 2 073 338
US-A- 3 905 623
US-A- 4 103 399

(73) Patentinhaber : **Janssen, Manfred, Dr.-Ing.**
**Moerser Strasse 398**
**D-4150 Krefeld (DE)**

(72) Erfinder : **Janssen, Manfred, Dr. Ing.**
**Moerser Strasse 398**
**D-4150 Krefeld (DE)**
Erfinder : **Schmidt, Volker, Dr. Ing.**
**Michaelstrasse 8**
**D-4330 Mülheim (DE)**
Erfinder : **Bachmann, Theodor**
**Haus Gravenerstrasse 39**
**D-4018 Langenfeld (DE)**

(74) Vertreter : **Stark, Walter, Dr.-Ing. et al**
**Moerser Strasse 140**
**D-4150 Krefeld (DE)**

## Beschreibung

Die Erfindung betrifft eine lösbare rohrförmige Klemme zum Verbinden von zylindrischen Rohren, — mit einer längslaufenden nach innen offenen Längsrippe, die vor dem Verklemmen einen U-förmigen (ohrförmigen) Querschnitt aufweist und deren Schenkel nach dem Verklemmen teilweise aneinanderliegen.

Bekannterweise werden zylindrische Körper durch Schraubschellen verbunden, die es in vielen Ausführungen gibt. So zeigt die DE-A-28 00 060 zwei Rohrhalbschalen, die über die zu verbindenden Enden von Rohren gestülpt und durch zwei Schraubschellen befestigt werden. Die DE-A-28 43 466 schlägt für den vorübergehenden Gebrauch an Kfz-Auspuffrohren zwei Rohrhalbschalen vor, die mit einer oder zwei Federklammern die Rohrenden zusammenhalten.

Es sind ferner Rohrschellen bekannt, deren Verschraubung die zu verbindenden Rohre plastisch deformiert. Die Nachteile dieser Klemmen bestehen in einer ungenügenden mechanischen Festigkeit und Dichtigkeit, wenn die Klemmelemente zu schwach sind, oder in einer großen, schweren und teueren Dimensionierung der Schrauben, die dann leicht eine plastische Verformung hervorrufen können.

Eine zu starke plastische Verformung ist unerwünscht, weil dadurch die zu verbindenden Enden für eine Wiederverwendung mit einer neuen Verbindungsschelle ungeeignet werden. Auch die Rohrschelle ist für eine erneute Verwendung dann nicht mehr geeignet, weil die plastischen Deformationen über den Umfang Undichtigkeiten begünstigen.

Die Schrauben, die die plastische Deformation der Schelle und der Rohrenden bewirken, müssen deshalb so groß dimensioniert werden, weil z. B. die aufzuwendenden Kräfte bei Rohren im Bereich um 40 × 1,5 mm mit einer Schelle ebenso dicker Wand bereits 10 KN je cm Schellenlänge übersteigen.

Kfz-Auspuffrohre werden dadurch verbunden, daß ein Rohr geschlitzt, aufgeweitet und über das andere herübergeschoben wird. Die Steckverbindung wird mit einer Schraubschelle gesichert. Nachteilig ist die teuere Fertigung mit der Möglichkeit von Anrissen beim Aufweiten der Rohre und die schlechte Lösbarkeit der Schrauben nach einiger Gebrauchszeit.

Schraubschellen, die die unbearbeiteten Auspuffrohrenden aufnehmen, lassen sich ebenfalls nach einiger Gebrauchszeit schwer lösen (US-A-39 05 623). Sie sind darüber hinaus schwer und widersprechen dem Leichtbaugedanken im Fahrzeugbau. Für Auspuffrohre ist auch eine Klemme vorgeschlagen worden, die aus besonders profiliertem Rohr besteht. Das Rohr besitzt an einer oder mehreren Stellen im Querschnitt eine ohrförmige Ausbuchtung, die verpreßt wird und so die mechanische Festigkeit erzeugt.

Mit einer lösbaren rohrförmigen Klemme der eingangs beschriebenen Gattung (DE-A-22 52 874) sollen Rohrenden verbunden werden, die im Bereich der Stoßstellen drehsymmetrische Verdickungen aufweisen. Bei Verwendung dieser Klemme sind ebenso wie bei Verwendung einer anderen, zum Verbinden von Abflußrohren bestimmten Klemme (FR-A-20 31 764) die Rohrenden nicht gegen Verdrehung gesichert oder sicherbar.

Aufgabe der Erfindung ist es, eine gattungsgemäße Klemme zum Verbinden von zylindrischen Rohren zu schaffen, mit der eine kompakte, steife und drehsichere Verbindung der Rohrenden möglich ist.

Diese Aufgabe wird dadurch gelöst, daß die an die Längsrippe anschließenden Bereiche des Klemmantels einen von der Kreisform abweichenden Querschnitt mit radial nach innen gerichteten Verformungen aufweisen und somit beim Verklemmen entsprechende Verformungen der Rohre verursachen. Insbesondere können die an die Längsrippe anschließenden Bereiche des Klemmantels konvex oder eben ausgebildet sein. Der Klemmantel selbst kann aus einem Rohr oder aus einem Band gefertigt sein.

Mit dieser Klemme können Rohrenden ohne Profilierung zuverlässig und verdrehsicher miteinander verbunden werden. Das Verklemmen oder Verpressen wird mit einer geeigneten Preßzange vorgenommen, wobei die Klemme und die Rohrenden bis an den Rand der plastischen Verformung, gegebenenfalls auch etwas darüber hinaus, verformt werden. Eine weitergehende plastische Verformung wird dadurch verhindert, daß beim Verpressen Material aus der Längsrippe in den Klemmmantel nachströmt. Die Klemme kann auch wieder gelöst werden, z. B. mit einem Blechschneider.

Zur besseren Abdichtung der so hergestellten Rohrverbindung kann der Klemmantel in seiner Längsrippe mit einem Dichtungsstrang oder mit einer flächenhaften Dichtung versehen sein. Das Dichtungsmaterial kann den ganzen Umfang oder Teile davon, z. B. nur die zu verpressenden Abschnitte im Bereich der Längsrippe, erfassen.

Die Klemme kann ohne Schwierigkeiten auch zur Herstellung einer Rohrbogenverbindung eingesetzt werden.

In den beigefügten Zeichnungen ist eine mögliche Ausführungsform einer erfindungsgemäßen lösbaren rohrförmigen Klemme schematisch dargestellt.

Es zeigen :

Figur 1  den Querschnitt des Klemmantels mit vorgeformter Ausbuchtung und eingeschobenen Rohrenden vor dem Verpressen

Figur 2  einen Querschnitt gemäß Figur 1 nach dem Verpressen

Figur 3  die vergrößerte Darstellung der verpreßten Rohrverbindung im Bereich der ohrenförmigen Ausbuchtung

Figur 4  eine perspektivische Darstellung der Klemmverbindung

Figur 5 einen Querschnitt durch den Klemmantel mit eingelegtem Dichtstrang in der Ausbuchtung

Figur 6 einen Querschnitt wie Figur 5 mit flächenhafter Dichtung in der Ausbuchtung

Figur 7 einen abgewinkelten Klemmantel in perspektivischer Darstellung

Figur 8 eine verpreßte Rohrklemmverbindung mit einem abgewinkelten Klemmantel in Ansicht.

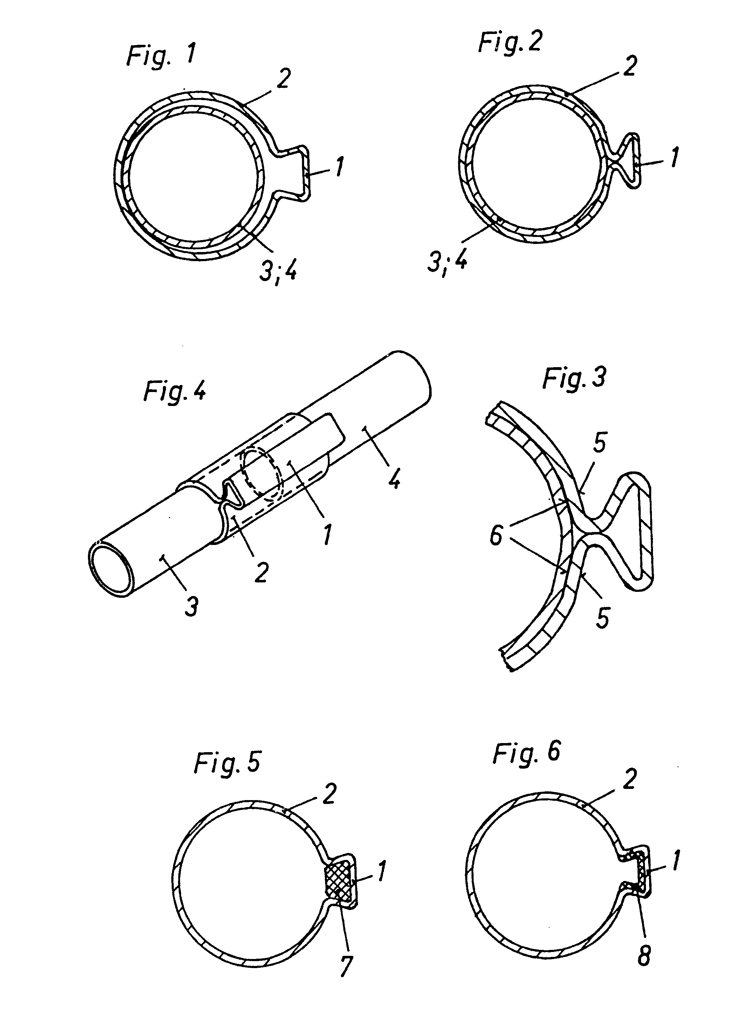

Wie Figur 1 zeigt, befindet sich der Klemmantel 2 mit seiner Längsrippe in Form einer Ausbuchtung 1 in Preßstellung, indem er die zu verbindenden Rohrenden 3 und 4 aufnimmt.

In Figur 2 ist der Klemmantel 2 auf die Rohrenden 3 und 4 aufgepreßt.

Im Bereich der Ausbuchtung 1 erhält der Klemmantel 2 Abplattungen 5 und 6, die sich auch den zu verbindenden Rohrenden mitteilen. Figur 3 stellt diesen für die Verdrehfestigkeit der Verbindung wichtigen Sachverhalt der Abweichung von der Kreisform in vergrößertem Maßstab dar.

Figur 4 zeigt eine Rohrklemmverbindung im verpreßten Zustand in perspektivischer Darstellung. Um die nötige Dichtigkeit zu erzeugen, sind in die Ausbuchtung 1 Dichtstränge 7 oder flächenhafte Dichtungen 8 eingelegt oder eingebracht (siehe Figur 5 und 6). Der Dichtstrang 7 oder die flächenhafte Dichtungsauflage 8 bestehen vorzugsweise aus temperaturbeständigem Werkstoff (z. B. Steinwolle) in lokkerer Konfektionierung.

Die Dichtung kann auch durch Dichtpaste bewirkt werden.

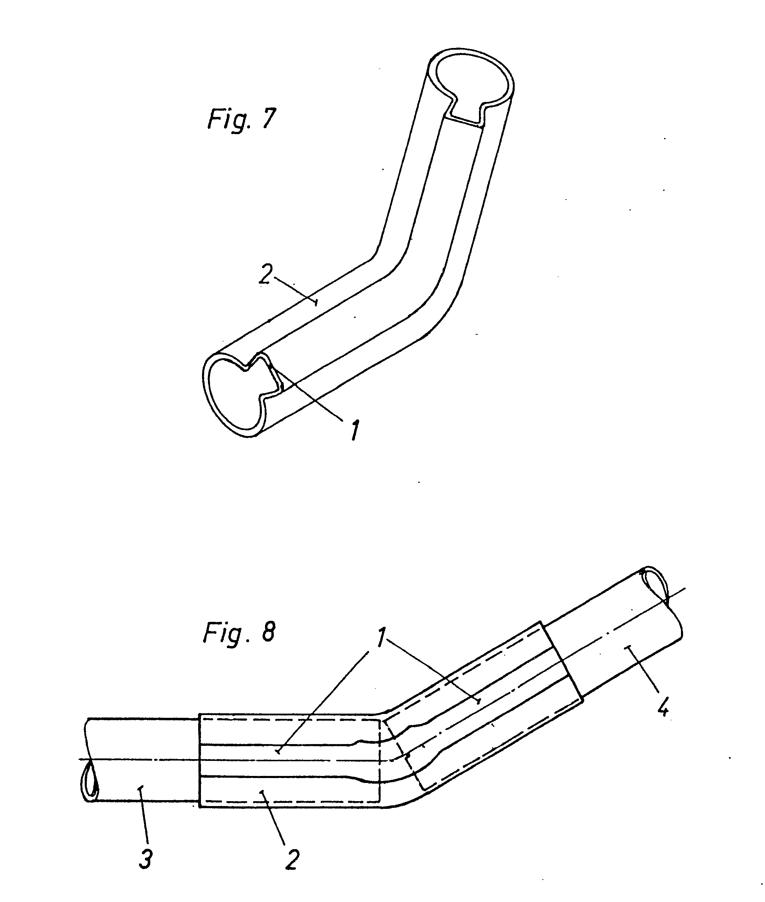

Wie in den Figuren 7 und 8 dargestellt, eignet sich die erfindungsgemäße Rohrklemmverbindung auch zur Verbindung von Rohren, die im Winkel zueinander stehen. Der Klemmmantel 2 erhält hierzu die erforderliche Biegung.

**Patentansprüche**

1. Lösbare rohrförmige Klemme zum Verbinden von zylindrischen Rohren (3, 4), — mit einer längslaufenden nach innen offenen Längsrippe (1), die vor dem Verklemmen einen U-förmigen (ohrenförmigen) Querschnitt aufweist und deren Schenkel nach dem Verklemmen teilweise aneinanderliegen, dadurch gekennzeichnet, daß die an die Längsrippe (1) anschließenden Bereiche (5, 6) des Klemmmantels (2) einen von der Kreisform abweichenden Querschnitt mit radial nach innen gerichteten Verformungen aufweisen und somit beim Verklemmen entsprechende Verformungen der Rohre (3, 4) verursachen.

2. Klemme nach Anspruch 1, dadurch gekennzeichnet, daß die an die Längsrippe (1) anschließenden Bereiche des Klemmantels (2) konvex oder eben ausgebildet sind.

3. Klemme nach Anspruch 1 oder 2, dadurch gekennzeichnet, daß der Klemmantel (2) aus einem Rohr oder aus Band gefertigt ist.

4. Klemme nach einem der Ansprüche 1-3, dadurch gekennzeichnet, daß der Klemmantel (2) in seiner Längsrippe (1) mit einem Dichtungsstrang (7) oder einer flächenhaften Dichtung (8) versehen ist.

**Claims**

1. A detachable tubular clamp for connecting cylindrical tubes (3, 4), with a longitudinally extending longitudinal rib (1) open inwards, which has a U-shaped (ear-shaped) cross-section before clamping, and the members of which partially abut on one another after clamping, characterised in that the regions (5, 6) adjacent the longitudinal rib (1) have a cross-section which deviates from the circular shape, with deformations guided radially inwards, thus causing corresponding deformations of the tubes (3, 4) when clamped.

2. A clamp according to claim 1, characterised in that the regions of the clamping sleeve adjacent the longitudinal rib (1) are designed so as to be convex or flat.

3. A clamp according to claim 1 or 2, characterised in that the clamping sleeve (2) is made from a tube or a metal strip.

4. Clamp according to any one of claims 1 to 3, characterised in that the clamping sleeve (2) in its longitudinal rib (1) is provided with a sealing billet (7) or a surface seal (8).

**Revendications**

1. Collier tubulaire détachable pour le raccordement de tuyaux cylindriques (3, 4), muni d'une nervure longitudinale (1) ouverte vers l'intérieur qui présente avant le serrage une section en U (en forme d'oreille) et dont les ailes, après le serrage, s'appliquent partiellement l'une contre l'autre, caractérisé en ce que les régions (5, 6) de la paroi latérale de serrage (2) qui se raccordent à la nervure longitudinale (1) présentent une section s'écartant de la forme circulaire avec déformations dirigées radialement vers l'intérieur et causent ainsi lors du serrage des déformations correspondantes des tubes (3, 4).

2. Collier selon la revendication 1, caractérisé en ce que les régions de la paroi latérale de serrage (2) qui se raccordent à la nervure longitudinale (1) sont conçues sous forme convexe ou plane.

3. Collier selon l'une des revendications 1 et 2, caractérisé en ce que la paroi latérale de serrage (2) est fabriquée en partant d'un tube ou d'une bande.

4. Collier selon l'une des revendications 1 à 3, caractérisé en ce que la paroi latérale de serrage (2) est munie dans sa nervure longitudinale (1), d'un cordon d'étanchéité (7) ou d'un joint plat (8).

0 098 236

Fig. 1

Fig. 2

Fig. 4

Fig. 3

Fig. 5

Fig. 6

1

Fig. 7

2

1

Fig. 8

1

4

3

2